(19) Europäisches Patentamt
European Patent Office
Office européen des brevets

(11) **EP 1 892 498 A1**

(12) **EUROPEAN PATENT APPLICATION**

(43) Date of publication:
**27.02.2008 Bulletin 2008/09**

(51) Int Cl.:
*G01B 5/24* [(2006.01)]     *G01B 7/30* [(2006.01)]
*G01B 21/22* [(2006.01)]    *G01D 5/04* [(2006.01)]
*G01D 5/12* [(2006.01)]

(21) Application number: **07016407.4**

(22) Date of filing: **22.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **25.08.2006 JP 2006228581**

(71) Applicant: **Niles Co., Ltd.**
**Tokyo 143-8521 (JP)**

(72) Inventors:
• **Ebashi, Akio**
 **Ota-ku**
 **Tokyo, 143-8521 (JP)**
• **Sato, Yasuhiro**
 **Ota-ku**
 **Tokyo, 143-8521 (JP)**

(74) Representative: **Luderschmidt, Schüler & Partner Patentanwälte,**
 **John-F.-Kennedy-Strasse 4**
 **65189 Wiesbaden (DE)**

(54) **Rotational angle detector**

(57)     Since rotation of a rotor gear (3) which rotates integrally with a steering shaft is reduced by a speed reduction system constituted by a planetary gear system, and rotation after the speed reduction is transmitted to a speed reduction side detecting gear, transmission efficiency of the rotation is improved, and since shafts of the respective gears constituting the speed reduction system are directed in the same direction, the rotation of the steering shaft can be transmitted to the speed reduction side detecting gear with reduced clattering. Accordingly, since the clattering at the speed reduction system is reduced, the rotational angle of the steering shaft can be detected more accurately.

**Fig.1**

**Description**

CROSS-REFERENCE TO RELATED APPLICATION

This application is based on Japanese Patent Application No. 2006-228581 filed on August 25, 2006, the disclosure of which is incorporated herein by reference.

BACKGROUND OF THE INVENTION

1. FIELD OF THE INVENTION

The present invention relates to a rotational angle detector for detecting a rotational state of a steering shaft mounted on a vehicle.

2. THE RELATED ART OF THE INVENTION

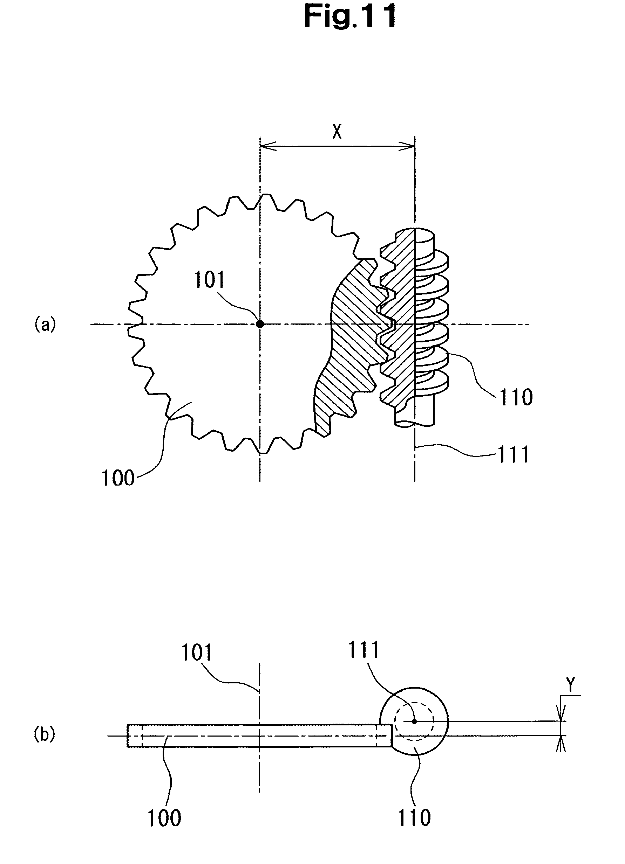

Conventionally, there is a rotational angle detector for detecting an absolute steering angle of a steering shaft connected to a steering wheel of a vehicle, and for outputting a detected result to another control apparatus or the like.
In such a detector, a gear is fitted into the steering shaft for detecting a rotational state of a rotational angle detecting gear connected to the gear. Further, the rotational angle detecting gear is made to rotate in a larger rotation speed than the rotation speed of the steering gear, such that the rotational angle of the steering gear can be minutely detected. (Hereinafter, the rotational angle detecting gear which rotates in a larger rotation speed than the rotation speed of the steering gear is also referred to as a speed increase side detecting gear).
However, since these steering wheels rotate, for example, respectively 720° to the left and right directions, for example, "how many rotation numbers are to the right" cannot be detected only by performing detection of the rotational state of one rotational angle detecting gear which rotates in association with the steering shaft.
Therefore, there is an rotational angle detector to which a rotational angle detecting gear which is connected to a gear fitted in a steering shaft and rotates less than the rotation of the steering shaft (hereinafter the rotational angle detecting gear which rotates less than the rotation of the steering shaft is also referred to as a speed reduction side detecting gear) is added.
The speed reduction side detecting gear makes, for example, 1/2 rotation (rotation speed of less than one rotation is set) when the steering shaft is rotated from the maximum rotational position in the right direction to the maximum rotational position in the left direction, and the rotational angle of the steering shaft can be roughly grasped by detecting the rotational state of the speed reduction side detecting gear.
As the rotational angle detector for detecting the position of the steering shaft, by dividing the rotation of the steering shaft into the speed increase side and the speed-decreasing side to detect the rotational states of the two sides, as described above, there is one, for example, described in JP-2003-42752A.
In the rotational angle detector described in JP-2003-42752A, a worm gear is connected to a gear fitted into the steering shaft, a rotational state of the worm gear is used as the speed increase side detecting gear described above, and further, gear teeth formed on a peripheral plane of a shaft of the worm gear and gear teeth formed inside the detecting section are in mesh with the shaft of the worm gear through the detecting section, and the detecting section which moves in the axial direction of the worm gear in accordance with the rotation of the worm gear is used as the speed reduction side detecting gear described above.
However, in the rotational angle detector described in JP-2003-42752A, a worm gear is used for dividing the rotation of the steering shaft into the speed increase side and the speed-decreasing side.
Here, consideration is made of the cause of generation of clattering in the worm gear.
Clatters in two directions cause generation of the clattering of the worm gear. One is a clatter with regard to a shaft-shaft distance X between a shaft center 101 of the worm wheel 100 and shaft center 111 of the worm gear 110 when viewed from shaft center direction of the worm wheel 100 as shown in Fig. 11A, and another is a clatter with regard to a shaft-shaft distance Y between a centerline in the thickness direction of the worm wheel 100 and the shaft center 111 of the worm gear 110 when viewed from the shaft center direction of the worm gear 110 as shown in Fig. 11B.
Accordingly, in the rotational angle detector by use of the worm gear described in JP-2003-42752A, there is a problem that the clattering becomes larger by the clatters in two directions and, as a result, detection precision of the steering angle is deteriorated.
In view of the above, there exists a need for a rotational angle detector which overcomes the above-mentioned problem in the related art. The present invention addresses this need in the related art as well as other needs, which will become apparent to those skilled in the art from this disclosure.

## SUMMARY OF THE INVENTION

An object of the present invention is to provide a rotational angle detector having less clattering between gears and high detection precision.

An aspect of the present invention provides a rotational angle detector, which comprises a rotor which rotates integrally with a measuring-object rotor, a speed reduction side detecting rotor to which rotation which is obtained by reducing the rotation of the rotor is transmitted, a speed increase side detecting rotor which is in mesh with the rotor and rotates at a speed faster than the speed reduction side detecting rotor, a speed reduction side rotation detecting section for detecting a rotational state of the speed reduction side detecting rotor, a speed increase side rotation detecting section for detecting a rotational state of the speed increase side detecting rotor, an absolute rotational angle detecting section for computing an absolute rotational angle of the measuring-object rotor from a detection result by the speed reduction side rotation detecting section and the speed increase side rotation detecting section, a planetary gear system which reduces the rotation of the rotor to transmit to the speed reduction side detecting rotor, and a case for accommodating at least the planetary gear system, wherein the planetary gear system comprises an operating gear to which the rotation of the rotor is transmitted, a planetary gear which revolves about a rotational shaft of the operating gear in association with the rotation of the operating gear, a stationary gear in which an internal gear section which is fixed to the case and formed inside thereof is in mesh with one-end side end section in an axial direction of the planetary gear, and a driven gear, which is rotatable coaxially with the operating gear, of which the internal gear section formed inside thereof is in mesh with the other-end side end section in the axial direction of the planetary gear, and of which the outer gear section formed outside thereof is in mesh with the speed reduction side detecting rotor, wherein since the stationary gear is in mesh with the planetary gear, the planetary gear revolves about the stationary gear and also rotates on its axis, and the driven gear is rotated by the rotation of the planetary gear.

## ADVANTAGE OF THE INVENTION

According to the present invention, since rotation of a rotor is made to decelerate by a planetary gear system, the planetary gear system is efficient in transmission of the rotation, and the rotation of the rotor can be transmitted to a speed reduction side detecting rotor with reduced clattering. As a result, a rotational angle of a measuring-object rotor can be detected more accurately.

These and other objects, features, aspects and advantages of the present invention will be become apparent to those skilled in the art from the following detailed description, which, taken in conjunction with the annexed drawings, discloses a preferred embodiment of the present invention.

## BRIEF EXPLANATION OF THE DRAWINGS

Referring now to the attached drawings which form a part of this original disclosure:

Fig. 1 is a view showing a state where respective gears are assembled in a case;
Figs. 2(a), 2(b) are views showing states where a substrate and a terminal block are assembled;
Fig. 3 is a view showing an upper plane of a rotational angle detector;
Fig. 4 is an enlarged view showing A-A section in Fig. 1;
Fig. 5 is an enlarged view showing B-B section in Fig. 1;
Fig. 6 shows an expanded perspective view of a speed reduction system;
Fig. 7 is a view of a stationary gear viewed from an internal gear side;
Fig. 8 shows a functional block diagram for computing a steering angle;
Fig. 9 shows waveforms outputted from a MR sensor;
Fig. 10 is a block diagram showing processing performed in an angle calculating section; and
Figs. 11 (a), 11 (b) are views showing the cause of generation of clattering of a worm gear.

## DETAILED DESCRIPTION OF THE PREFERRED EMBODIMENT

A selected preferred embodiment of the present invention will now be explained with reference to the drawings. It will be apparent to those skilled in the art from this disclosure that the following description of the embodiment of the present invention is provided for illustration only, and not for the purpose of limiting the invention as defined by the appended claims and their equivalents.

Now, description is made of an embodiment of the present invention.

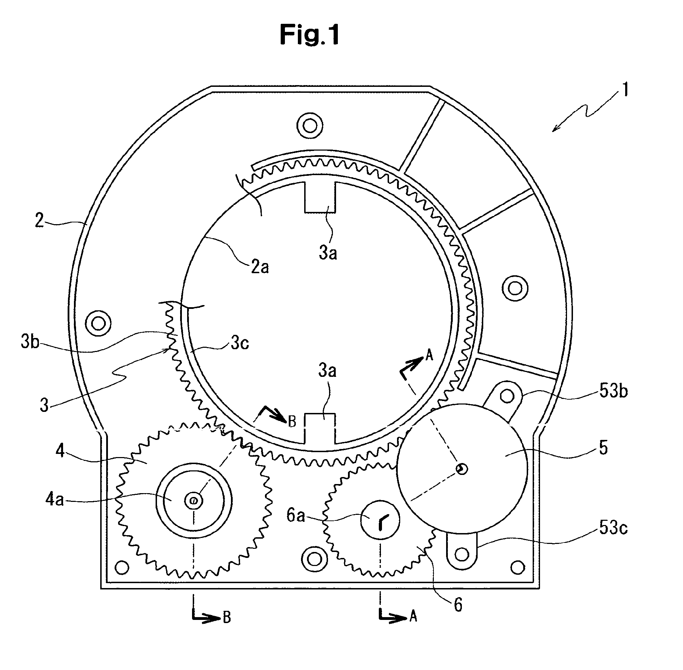

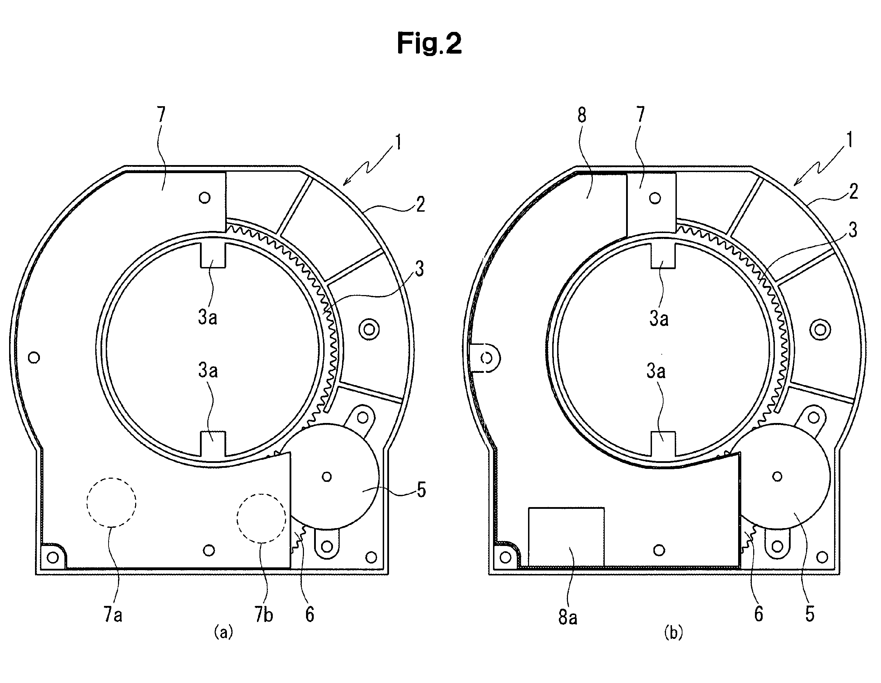

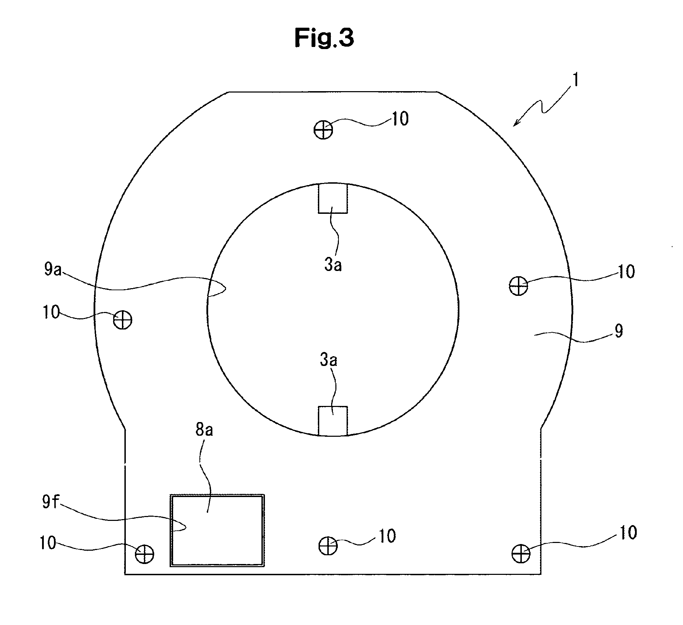

Fig. 1 shows a state in which respective gears are assembled in a case 2, Fig. 2(a) shows a state in which a substrate 7 is assembled, and Fig. 2(b) shows a state in which a terminal block 8 is assembled. Further, Fig. 3 shows an upper plane of a rotational angle detector.

It should be noted that, in Fig. 1, a part of a rotor gear 3 is broken in order to show an opening section 2a of the case 2.

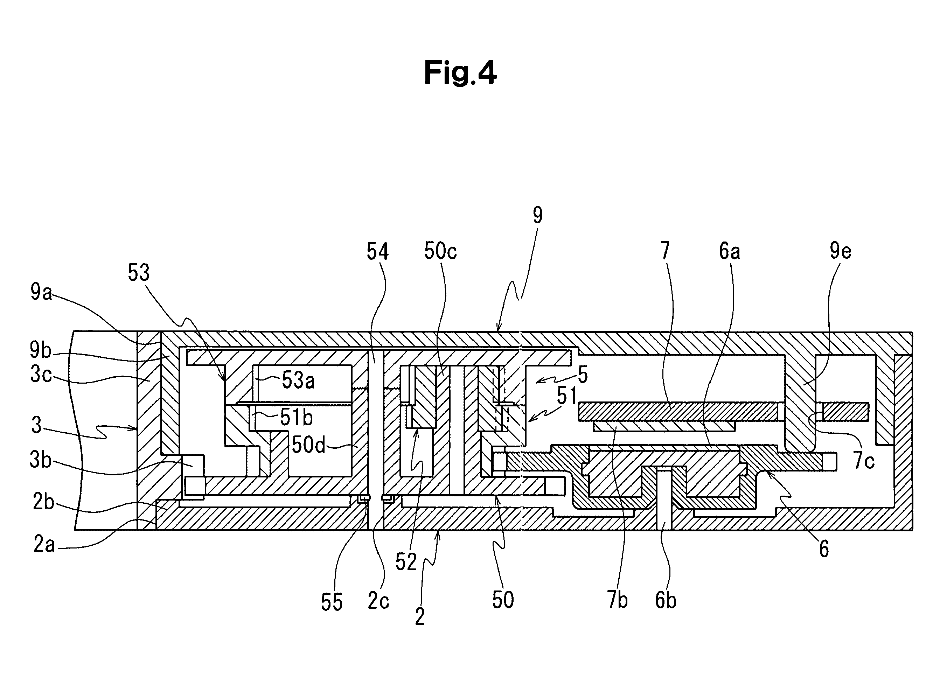

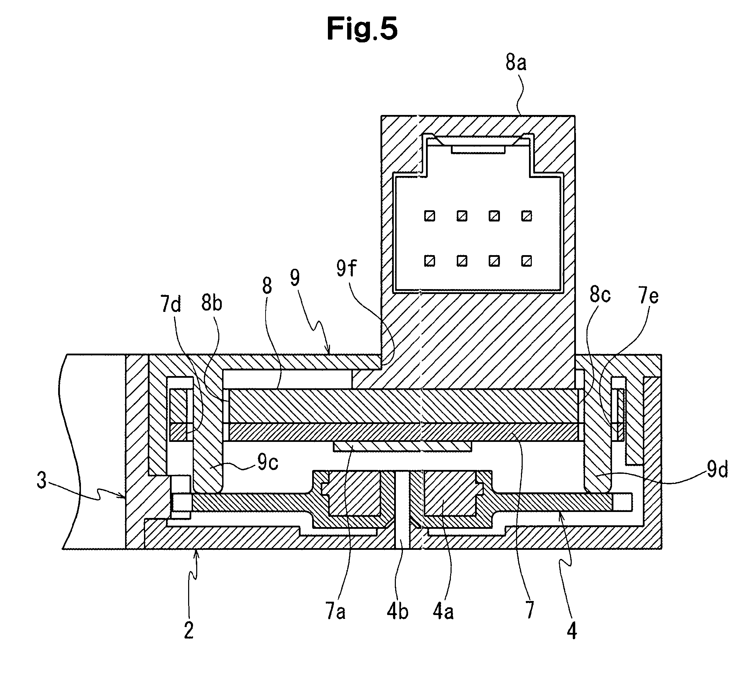

Further, Fig. 4 shows an enlargement of A-A sectional plane in Fig. 1, and Fig. 5 shows an enlargement of B-B sectional plane in Fig. 1.

The case 2 which accommodates respective gears and the like is provided with a through-hole 2a to allow a steering shaft to penetrate through.

As particularly shown in Fig. 3, on a cover 9 covering the opening of the case 2, a through-hole 9a is provided to allow the steering shaft to penetrate through.

The rotor gear 3 supported by the case 2 and the cover 9 is coaxially arranged with the through-holes 2a, 9a.

The rotor gear 3 is composed of a cylindrical cylinder section 3c and gear teeth 3b provided on a periphery of the cylinder section 3c, and is provided with two engaging sections 3a which are protruded from an inside plane of the cylinder section 3c and fitted into a concave section of the steering shaft (not shown).

Since the cylinder section 3c is fitted into the through-hole 2a and through-hole 9a, and receives rotation of the steering shaft through the engaging section 3a, the rotor gear 3 relatively rotates for the case 2 and the cover 9.

As particularly shown in Fig. 4, a gear tooth 3b of the rotor gear 3 is interposed between a cylindrical convex section 2b extending toward the side of the cover 9 from an edge of the through-hole 2a of the case 2 and a cylindrical convex section 9b extending toward the side of the case 2 from an edge of the through-hole 9a of the cover 9, and thus clattering in the axial direction of the rotor gear 3 is suppressed.

As particularly shown in Fig. 5, a rotational shaft 4b is pressed into the case 2 and protrudes toward the side of the cover 9.

A speed increase side detecting gear 4 is fitted into the rotational shaft 4b, and the speed increase side detecting gear 4 is made pivotal about the rotational shaft 4b.

From a plane on a side of the cover 9 opposing to the speed increase side detecting gear 4, convex sections 9c, 9d extend toward the speed increase side detecting gear 4.

By regulating movement in the axial direction of the speed increase side detecting gear 4 by the convex sections 9c, 9d, clattering in the axial direction of the speed increase side detecting gear 4 is suppressed.

On a plane of the cover 9 side of the speed increase side detecting gear 4, a magnet 4a is buried around the rotational shaft 4b.

The speed increase side detecting gear 4 is in mesh with the rotor gear 3 and receives rotation of the rotor gear 3 to rotate in a form to increase the speed.

As particularly shown in Fig. 4, a rotational central shaft 54 protrudes from a plane of one side of a speed reduction system 5 provided with a planetary gear system.

The rotational central shaft 54 protruding from the speed reduction system 5 is inserted into a supporting hole 2c provided on the case 2.

The speed reduction system 5 is provided with an operating gear 50 in mesh with the rotor gear 3, and after the rotation of the rotor gear 3 is reduced by the planetary gear system provided inside, the rotation is outputted from a driven gear 51.

Details of an internal structure of the speed reduction system 5 will be later described.

The rotational shaft 6b is pressed into the case 2 and protrudes toward the side of the cover 9.

The speed reduction side detecting gear 6 is fitted into the rotational shaft 6b, and the speed reduction side detecting gear 6 is made pivotal about the rotational shaft 6b.

Under the cover 9, a convex section 9e extends from a plane of a side opposing to the speed reduction side detecting gear 6 toward the speed reduction side detecting gear 6.

Movement of the speed reduction side detecting gear 6 toward the axial direction is regulated by the convex section 9e, and thereby clattering in the axial direction of the speed reduction side detecting gear 6 is suppressed.

In a plane of the side of the cover 9 of the speed reduction side detecting gear 6, a magnet 6a is buried around the rotational shaft 6b.

The speed reduction side detecting gear 6 rotates not more than 180 degrees even if the steering is rotated to the maximum rotation speed (lock-to-lock).

It should be noted that a convex section is provided, although not shown, at a suitable predetermined position in order to suppress clattering of the speed increase side detecting gear 4 and the speed reduction side detecting gear 6 in addition to the convex sections 9c, 9d, and 9e.

As shown in Fig. 2(a), in a state where the speed increase side detecting gear 4 and the speed reduction side detecting gear 6 are assembled into the case 2, a substrate 7 is arranged so as to cover at least the speed increase side detecting gear 4 and the speed reduction side detecting gear 6, and further to cover left half of the case 2 in Fig. 2(a).

As particularly shown in Fig. 5, at a position opposing to the magnet 4a of the speed increase side detecting gear 4 on the substrate 7, an MR sensor 7a for detecting a rotational state of the speed increase side detecting gear 4 is assembled. Further, as shown in Fig. 4, an MR sensor 7b is assembled at a position opposing to the magnet 6a of the speed reduction side detecting gear 6 on the substrate 7.

Further, on the substrate 7, a circuit (not shown) for performing processing and the like of a signal detected by the MR sensors 7a, 7b is attached at a position not interfering with other members.

As shown in Fig. 2(b), a terminal block 8 is arranged so as to be overlapped on the substrate 7.

The terminal block 8 is provided with a connector section 8a to be connected with a control device or the like of a vehicle side.

It should be noted that, in the terminal block 8, a connector section 8a protrudes to a side opposite to the side overlapped with the substrate 7.

Further, the terminal block 8 has a terminal (not shown) which is soldered to a terminal provided on the substrate 7, and further is temporarily fixed by a snap fit to the substrate 7.

The terminal block 8 receives a detection signal or the like from the substrate 7 and outputs it to the outside from the connector section 8a, or inputs a signal or the like inputted from the connector section 8a to the substrate 7.

As particularly shown in Fig. 4 and Fig. 5, the substrate 7 and the terminal block 8 are provided with through-holes 7c, 7d, 7e, 8b, and 8c at positions corresponding to convex sections 9c, 9d, and 9e, in order to avoid interference with the convex sections 9c, 9d, and 9e for suppressing the clatters of the speed increase side detecting gear 4 and/or the speed reduction side detecting gear 6.

A rotational angle detector 1 is constituted in the case 2 by covering an opening of the case 2 by the cover 9 in a state where the rotor gear 3, the speed increase side detecting gear 4, the speed reduction system 5, the speed reduction side detecting gear 6, the substrate 7, and the terminal block 8 are assembled, and by fixing the cover 9 to the case 2 by a screw 10 and the snap fit (not shown).

At the time of fixing the cover 9 by the screw 10, the substrate 7 and the terminal block 8 are also fixed to the case 2 together with the cover 9.

Further, as particularly shown in Fig. 5, the cover 9 is provided with a through-hole 9f to allow the connector 8a, mounted on the terminal block 8, to penetrate through.

Now, description is made of a structure of the speed reduction system 5 in detail.

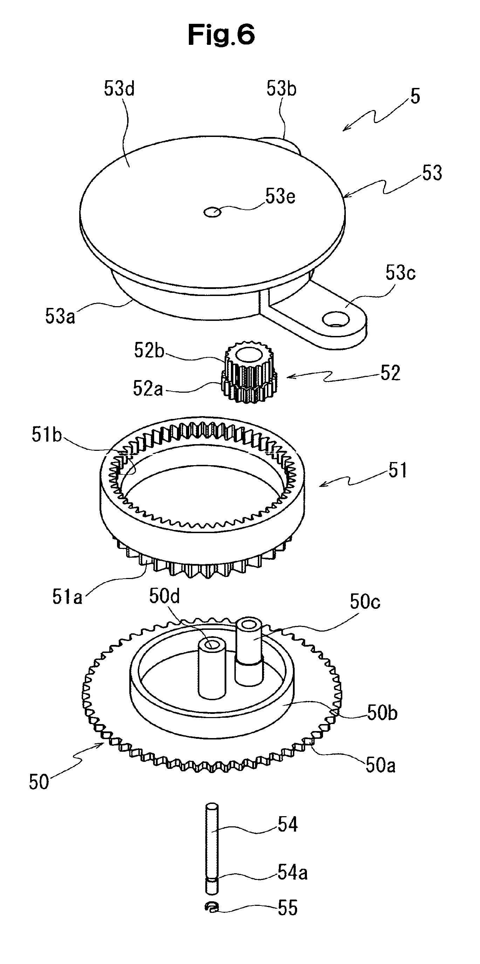

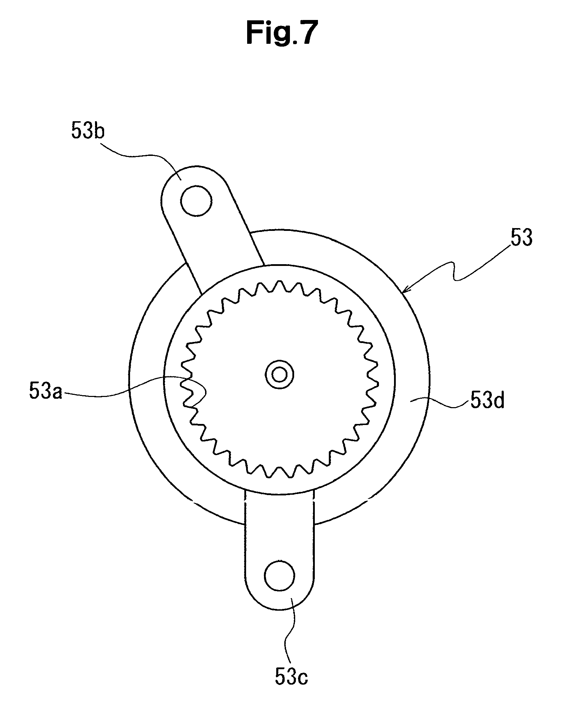

Fig. 6 is an exploded perspective view of the speed reduction system 5, and Fig. 7 is a view of a stationary gear 53 viewed from the side of an internal gear 53a.

The speed reduction system 5 comprises an operating gear 50 into which a rotation from the rotor gear 3 is inputted, a driven gear 51 for outputting a reduced rotation, a planetary gear 52, a stationary gear 53, a rotational central shaft 54, and a snap ring 55.

The operating gear 50 comprises a gear section 50a which is in mesh with the rotor gear 3 to receive a rotation from the rotor 3, a rotational shaft section 50b which cylindrically protrudes from the gear section 50a to work as the rotational shaft of the ring-shaped driven gear 51, a shaft supporting section 50d which cylindrically protrudes in the same direction as the rotational shaft section 50b in an axially central position of the gear section 50a and an inside of which is penetrated through by the rotational central shaft 54, and a rotational shaft section 50c which protrudes from a position deviated from the shaft supporting section 50d inside the rotational shaft section 50b to work as an rotational shaft of the planetary gear 52.

The driven gear 51 comprises an outer gear section 51 a and an internal gear section 51 b, which are coaxially connected with each other.

The driven gear 51 is pivotally fitted into outer peripheral side of the rotational shaft 50b which protrudes from the operating gear 50 on the internal peripheral side of the outer gear 51a, and is pivotally supported by the rotational shaft section 50b working as a shaft.

Further, the outer gear section 51 a is in mesh with the speed reduction side detecting gear 6 (refer to Fig. 4).

The planetary gear 52 comprises a planetary first gear section 52a and a planetary second gear section 52b which are coaxially connected, and the planetary first gear section 52a has a diameter larger than the planetary second gear section 52b (having a larger number of teeth). Because of difference in the number of teeth between the planetary first gear section 52a and the planetary second gear section 52b, freedom in designing is enhanced.

The planetary gear 52 is pivotally supported by a rotational shaft section 50c, and the planetary first gear section 52a is in mesh with the internal gear section 51 b of the driven gear 51.

The stationary gear 53 comprises a disk-shaped main body section 53d which is formed in substantially the same size as the gear section 50a of the operating gear 50 and interposes the driven gear 51 together with the gear section 50a, an internal gear section 53a which protrudes toward the side of the driven gear 51 from the main body section 53d (refer to Fig. 7), and arm sections 53b, 53c which protrude outward from the outer peripheral plane of the internal gear section 53a (refer to Fig. 7).

The internal gear section 53a has an outer shape formed in substantially the same size as the internal gear section 51 b of the driven gear 51, and each of the internal gear sections 51 b, 53a has an end plane in the axial direction which is slidably touched each other.

Further, the internal gear section 53a is in mesh with the planetary second gear section 52b of the planetary gear 52.

The arm sections 53b, 53c are respectively provided with a screw hole, and mounted in the case 2 by a screw (not shown) as particularly shown in Fig. 1, and thereby the stationary gear 53 is fixed to the case 2.

On the main body section 53d, a shaft hole 53e is provided, and in a state where the operating gear 50, the driven gear 51, the planetary gear 52, and the stationary gear 53 are assembled, a rotational central shaft 54 is inserted from the side of the operating gear 50 through the shaft supporting section 50d, and the insertion direction tip end side of the rotational central shaft 54 is pressed into the shaft hole 53e.

The snap ring 55 is fitted into a groove 54a provided on the rotational central shaft 54 such that the operating gear 50 is not pulled out to drop from the rotational central shaft 54 in a state where the rotational central shaft 54 is inserted into the operating gear 50.

The rotational central shaft 54 protrudes by a predetermined length from the operating gear 50 as particularly shown in Fig. 4.

The speed reduction system 5 is constituted as described above, and reduces the rotation speed of the rotor gear 3 inputted from the gear section 50a of the operating gear 50, and outputs it from the outer gear section 51a of the driven gear 51.

Further, by changing the number of teeth of the internal gear section 51 b of the driven gear 51, the planetary first gear section 52a and the planetary second gear section 52b of the planetary gear 52, and the internal gear section 53a of the stationary gear 53, a desired speed reduction gear ratio can be obtained.

Further, in the present embodiment, a lock-to-lock rotational angle of a steering is set to be 1440° (from +720° to -720°), and the gear ratio of the speed reduction system is set to be 1/8. Accordingly, when the steering is rotated lock-to-lock, the speed reduction side detecting gear 6 rotates by one rotation.

On the other hand, the gear ratio of the speed increase system is set such that the speed increase side detecting gear 4 makes two rotations for one rotation of the rotor gear 3. Accordingly, by detecting the rotational state of the speed increase side detecting gear 4 by the MR sensor 7a, the rotational state of the rotor gear 3 can be detected by the resolution of twice.

By the structure described above, when a driver of a vehicle rotates a steering wheel, the steering shaft connected to the steering wheel is rotated and the rotor 3 through which the steering shaft is penetrated is rotated.

The rotation of the rotor 3 is transmitted to the operating gear 50 of the speed reduction system 5 to rotate the operating gear 50, and thus the planetary gear 52 revolves about the shaft supporting section 50d which is the rotational shaft of the operating gear 50.

Since the planetary second gear section 52b is in mesh with the internal gear section 53a of the stationary gear 53 fixed to the case 2, the planetary gear 52 revolves about the shaft supporting section 50d and also rotates on its axis.

By rotation of the planetary gear 52 while it is revolving, the driven gear 51 which is in mesh with the planetary first gear section 52a of the planetary gear 52 is rotated.

Since the outer gear section 51 a provided on the outer periphery of the driven gear 51 and the speed reduction side detecting gear 6 are in mesh with each other, a rotation of the driven gear 51 is transmitted to the speed reduction side detecting gear 6.

Accordingly, the rotation of the rotor gear 3 is sequentially transmitted to the operating gear 50, the planetary gear 52, the driven gear 51, and the speed reduction side detecting gear 6, and the rotation of the rotor gear 3 is reduced to 1/8 in the process of the transmission, which is transmitted to the speed reduction side detecting gear 6.

Further, the rotation speed of the rotor gear 3 is increased to twice, which is transmitted to the speed increase side detecting gear 4 of the speed increase system.

Now, description is made of a detecting constitution of a steering angle.

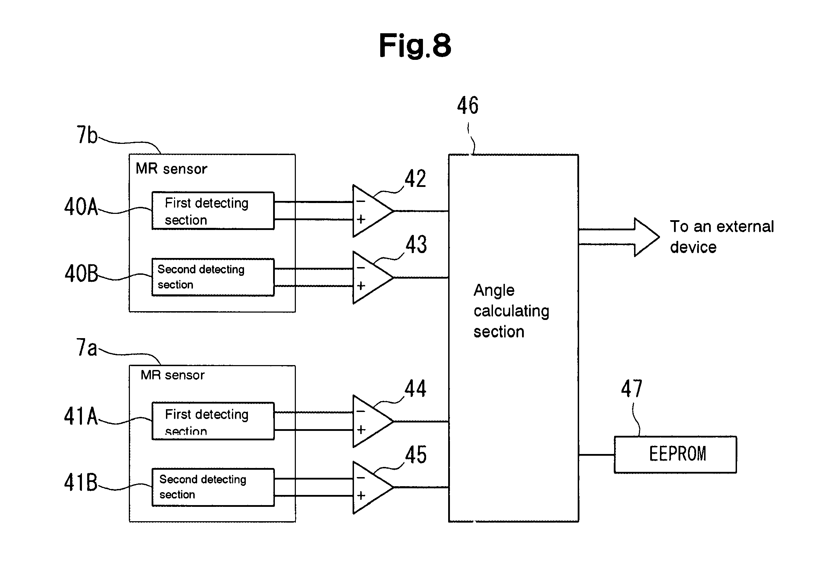

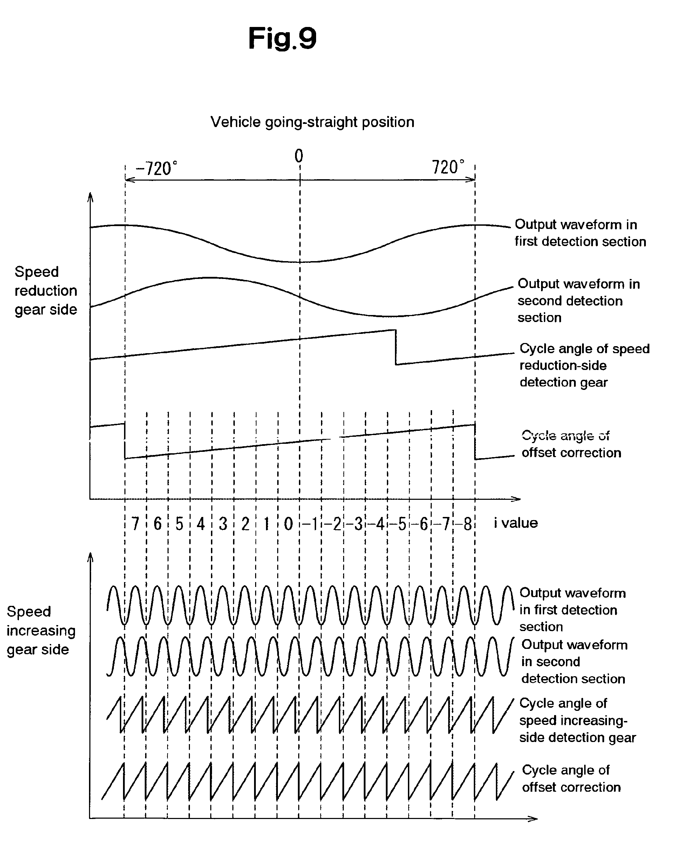

Fig. 8 shows a functional block diagram for computing the steering angle, and Fig. 9 shows waveforms outputted from the MR sensor.

It should be noted that respective constituting elements shown in Fig. 8 are loaded on the substrate 7.

MR sensor 7b is provided with a first detecting section 40A and a second detecting section 40B, and in association with the rotation of the magnet 6a fitted in the speed reduction side detecting gear 6, waveforms (waveforms showing voltage fluctuation) are outputted from respective detecting sections (40A, 40B). These two waveforms are different in phase by 90°.

Similarly, the MR sensor 7a is provided with a first detecting section 41A and a second detecting section 41 B, and outputs two waveforms (waveforms showing voltage fluctuation) having different phases by 90° in association with the rotation of the magnet 4a fitted in the speed increase side detecting gear 4.

Output waveforms from respective detecting sections (40A, 40B, 41A, 41 B) are respectively amplified by amplifiers 42 to 45, which are inputted into an angle calculating section 46.

It should be noted that, in the upper part of Fig. 9, waveforms inputted from the MR sensor 7b for detecting the rotational state of the speed reduction system side (the side of the speed reduction side detecting gear 6) are shown (the first detecting section output waveform, and the second detecting section output waveform), and in the lower part thereof, the waveforms inputted from the MR sensor 7a for detecting the rotational state of the speed increase system side (the side of the speed increase side detecting gear 4) are shown (the first detecting section output waveform, and the second detecting section output waveform).

The angle calculating section 46 detects a rotational angle of the steering based on the waveform inputted.

It should be noted that the angle calculating section 46 offsets the waveform inputted, by use of an offset correcting value recorded in an EEPROM 47.

Now, description is made in detail of steering angle detection processing.

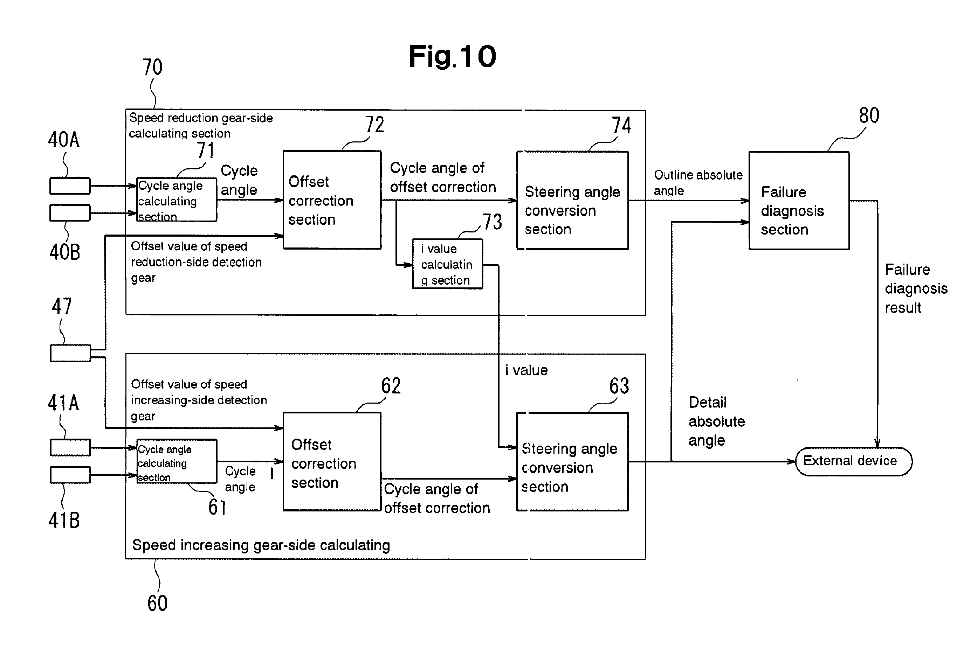

Fig. 10 is a block diagram showing processing performed in the angle calculating section 46.

It should be noted that the amplifiers 42 to 45 are omitted in Fig. 10.

The angle calculating section 46 comprises a speed reduction system side computing section 70 for computing an approximate absolute angle of the steering from the rotational angle of the speed reduction system (speed reduction side detecting gear 6), a speed increase system side computing section 60 for computing a detailed absolute angle of the steering from the rotational angle of the speed increase system (speed increase side detecting gear 4), and a failure diagnosis section 80 for performing failure analysis of the MR sensors 7a, 7b by the approximate absolute value and the detailed absolute value.

To start with, description is made of the processing in the speed reduction system side computing section 70.

The speed reduction system side computing section 70 is provided with a cycle angle calculating section 71, an offset correction section 72, an i-value computing section 73, and a steering angle converting section 74.

The cycle angle calculating section 71 determines a cycle angle of the speed reduction side detecting gear 6 from two waveforms, which are different in phase by 90°, and outputted from the first detecting section 40A and the second detecting section 40B.

For the method of computing an angle from the two waveforms which are different in phase by 90°, a known method can be used.

It should be noted that, the upper part in Fig. 9 shows a relation between the waveforms outputted from the first detecting section 40A and the second detecting section 40B, and the cycle angle of the speed reduction side detecting gear 6.

It should be noted that the cycle angle of the speed reduction side detecting gear 6 makes one cycle when the steering rotates from lock-to-lock (1440°).

The offset correction section 72 performs correction of the cycle angle computed by the cycle angle calculating section 71 by use of the speed reduction side detecting gear offset value stored in the EEPROM 47.

The correction is to convert the cycle angle into an angle having a straight running position of a vehicle as the reference by adding the speed reduction side detecting gear offset value to the cycle angle.

It should be noted that, as the speed reduction side detecting gear offset value, a value previously set for each of the rotational angle detector 1 is stored in the EEPROM 47.

By the correction by the offset correction section 72, an offset corrected cycle angle is obtained.

Then, the steering angle converting section 74 converts the offset corrected cycle angle corrected by the offset correction section 72 into the absolute angle of the steering.

Here, since the rotation of the speed reduction side detecting gear 6 is reduced to 1/8 for the rotation of the rotor gear 3 which rotates integrally with the steering shaft, it is converted into the absolute angle of the steering by multiplying the offset periodic corrected angle by 8.

It should be noted that the absolute angle of the steering converted by the steering angle converting section 74 is also referred to as the approximate absolute angle.

Further, the i-value computing section 73 computes the i-value which corresponds to the offset corrected cycle angle corrected by the offset correction section 72.

The i-value is, as shown in Fig. 9, obtained by dividing the rotational angle to lock-to-lock of the steering by each of 90° to the left and to the right from the center which is the straight running position of the vehicle, and the rotational angle of the steering is expressed in a unit of 90°. It should be noted that the i-value is a value between -8 to 7.

The i-value computing section 73 outputs the computed i-value to the side of the speed increase system side computing section 60.

Now, description is made of the processing in the speed increase system side computing section 60.

The speed increase side computing section 60 comprises a cycle angle calculating section 61, an offset correction section 62, and a steering angle converting section 63.

The cycle angle calculating section 61 determines the cycle angle of the speed increase side detecting gear 4 from the waveforms which are different in phase by 90° and are outputted from the first detecting section 41A and the second detecting section 41 B, in the same way as the cycle angle calculating section 71.

It should be noted that the lower part in Fig. 9 shows a relation between the waveforms outputted from the first detecting section 41A and the second detecting section 41 B, and the cycle angle of the speed increase side detecting gear 4.

It should be noted that the cycle angle of the speed increase side detecting gear 4 makes one cycle when the steering rotates 90°.

The offset correction section 62 performs correction of the cycle angle computed by the cycle angle calculating section 61 by use of the speed increase side detecting gear offset value stored in the EEPROM 47, in the same way as the offset correction section 72.

It should be noted that, in the EEPROM 47, both of the speed reduction side detecting gear offset value and the speed increase side detecting gear offset value are previously stored.

An offset corrected cycle angle is obtained by the correction by the offset correction section 62.

Then, the steering angle converting section 63 converts the offset corrected cycle angle into the absolute value of the steering by use of the i-value outputted from the speed reduction system side computing section 70.

More in particular, the rotation of the speed increase side detecting gear 4 is increased to twice of the rotation of the rotor gear 3 which rotates integrally with the steering shaft, and thus the offset corrected cycle angle is divided by two and, further, a value obtained by multiplying the i-value with 90 is added.

Consequently, the absolute value of the steering can be obtained by the following expression:

$$\alpha = 90 \times i + \beta/2$$

Here, $\alpha$ is the absolute angle of the steering, i is the i-value (-8, -7, ....6, 7), and $\beta$ is the offset corrected cycle angle.

It should be noted, since the speed increase side detecting gear 4 is increased to twice of the speed of the rotor gear 3, the rotational state of the rotor gear 3 can be detected by the resolution of twice by detecting the rotational state of the speed increase side detecting gear 4.

Accordingly, the steering absolute angle converted by the steering angle converting section 63 is more in detail than the steering absolute angle converted by the steering angle converting section 74.

It should be noted that the steering absolute angle obtained by conversion by the steering angle converting section 63 is also referred to as a detailed absolute angle.

It should be noted that, only when an ignition is turned on and the absolute angle of the steering is firstly detected, the i-value is outputted from the speed reduction system side computing section 70 to the speed increase system side computing section 60, and thereafter, the steering angle converting section 63 per se increases or decreases the i-value in accordance with the fluctuation of the offset corrected cycle angle, and the detailed absolute angle is computed by use of the increased or decreased i-value and the offset corrected cycle angle.

The detailed absolute angle of the steering thus obtained is outputted toward an outside device such as a vehicle control device (not shown) or the like from the angle calculating section 46.

The failure diagnosis section 80 compares the approximate absolute angle outputted from the steering angle converting section 74 of the decelerating system side computing section 70 with the detailed absolute angle outputted from the steering angle converting section 63 of the speed increase system side computing section 60, and when the difference of the absolute angle is not less than a certain value, it is determined that a failure is caused in either of the MR sensor 7a or the MR sensor 7b, and a failure diagnosis result is outputted to an outside device not shown.

By performing the failure diagnosis by the MR sensors 7a, 7b in this way, reliability of the steering rotational angle detection by the rotational angle detector 1 is improved.

It should be noted that, in the present embodiment, the rotor gear 3 constitutes the rotor, and the speed reduction side detecting gear 6 constitutes the speed reduction side detecting rotor. The speed increase side detecting gear 4 constitutes the speed increase side detecting rotor, and the speed reduction system 5 constitutes the planetary gear system. Further, the MR sensor 7b and the cycle angle calculating section 71 constitute the speed reduction side rotation detecting section, and the MR sensor 7a and the cycle angle calculating section 61 constitute the speed increase side rotation detecting section. The steering angle converting section 74 constitutes the approximate absolute angle calculating section, and the steering angle converting section 63 constitutes the absolute rotational angle detecting section.

The present embodiment is constituted as described above, the rotation of the rotor gear 3 which rotates integrally with the steering shaft is reduced by the speed reduction system 5 constituted by the planetary gear system, and the rotation after the speed reduction is made to be transmitted to the speed reduction side detecting gear 6. Therefore, the transmission efficiency of the rotation is improved. Further, since respective shafts of the operating gear 50, the driven gear 51, the planetary gear 52, and the stationary gear 53 are directed to the same direction, the rotation of the steering shaft can be transmitted to the speed reduction side detecting gear 6 with reduced clattering. Accordingly, since the clattering in the speed reduction system 5 is reduced, the rotational angle of the steering shaft can be more accurately detected.

Further, by assembling the gears from operating gear 50 to the stationary gear 53 constituting the speed reduction system 5 in one unit, precision in a single unit of the speed reduction system 5 is made easier to realize, and the detection precision of the rotational angle detector 1 can be more improved.

Further, since the speed reduction system 5 for reducing the rotation of the rotor gear 3 is adapted to be constituted by the planetary gear system, the speed reduction system 5 can be formed in compact without spreading in the widening direction of the gear, in comparison with a case where the speed reduction is performed by a wheel row of simple spur gears.

Further, since the speed reduction system 5 is adapted to be assembled as one unit in the case 2, even in a case, for example, where the rotational angle detector 1 is attached on a vehicle having different maximum rotational angle of the steering, it can be applied only by suitably exchanging with the speed reduction system having different speed reduction ratio, and an alteration of mechanical parts inside the rotational angle detector 1 can be minimized.

Computation of the absolute angle of the steering is made to be performed by use of the i-value computed by the i-value computing section 73 from the detection result of the MR sensor 7b which detects the rotational state of the speed reduction side detecting gear 6, and the detection result of the MR sensor 7a which detects the rotational state of the speed increase side detecting gear 4, and the absolute angle of the steering can be computed in detail as well as in high precision.

Further, since the failure diagnosis section 80 is adapted to determine whether any failure is generated in the MR sensors 7a, 7b, by comparing the approximate absolute value of the steering computed by the speed reduction system side computing section 70 with the detailed absolute angle computed by the speed increase system side computing section 60, reliability of the steering rotational angle detection by the rotational angle detector 1 can be improved.

Further, since it is made to determine whether any failure is generated in the MR sensors 7a, 7b by use only of the speed reduction system 5, the speed reduction side detecting gear 6, the speed reduction system side computing section 70, the speed increase side detecting gear 4, and the speed increase system side computing section 60 which are necessary in the detection of the rotational angle of the steering, without providing any separate members for the failure diagnosis, the failure diagnosis can be performed without an increase in costs or in size.

While only a selected preferred embodiment has been chosen to illustrate the present invention, it will be apparent to those skilled in the art from this disclosure that various changes and modifications can be made herein without departing from the scope of the invention as defined in the appended claims. Furthermore, the foregoing description of the preferred embodiment according to the present invention is provided for illustration only, and not for the purpose of limiting the invention as defined by the appended claims and their equivalents.

**Claims**

1. A rotational angle detector comprising:

   a rotor which rotates integrally with a measuring-object rotor,
   a speed reduction side detecting rotor to which a rotation which is obtained by reducing the rotation of the rotor is transmitted,
   a speed increase side detecting rotor which is in mesh with the rotor and rotates at a speed faster than the speed reduction side detecting rotor,
   a speed reduction side rotation detecting section for detecting a rotational state of the speed reduction side detecting rotor,
   a speed increase side rotation detecting section for detecting a rotational state of the speed increase side detecting rotor,
   an absolute rotational angle detecting section for computing an absolute rotational angle of the measuring-object rotor from a detection result by the speed reduction side rotation detecting section and the speed increase side rotation detecting section,
   a planetary gear system which reduces the rotation of the rotor and transmits the rotation to the speed reduction side detecting rotor, and
   a case for accommodating at least the planetary gear system,

   wherein the planetary gear system comprises:

   an operating gear to which the rotation of the rotor is transmitted,
   a planetary gear which revolves about a rotational shaft of the operating gear in association with the rotation of the operating gear,

a stationary gear in which an internal gear section which is fixed to the case and formed inside thereof is in mesh with one-end side end section in an axial direction of the planetary gear, and

a driven gear, which is rotatable coaxially with the operating gear, of which the internal gear section formed inside thereof is in mesh with the other-end side end section in the axial direction of the planetary gear, and of which the outer gear section formed outside thereof is in mesh with the speed reduction side detecting rotor, wherein

since the stationary gear is in mesh with the planetary gear, the planetary gear revolves about the stationary gear and rotates on its axis, and the driven gear is rotated by the rotation of the planetary gear.

2. The rotational angle detector as claimed in Claim 1, wherein

the planetary gear system is assembled as one unit.

3. The rotational angle detector as claimed in Claim 1 or Claim 2, wherein

the speed increase side detecting rotor rotates with a rotation speed of n-times of the rotation speed for the measuring-object rotor,

the speed increase side rotation detecting section outputs a cycle angle $\beta$ which makes one cycle when the speed increase side detecting rotor rotates 180° ((360/n) x (1/2) in the angle of the measuring-object rotor,

the speed reduction side detecting rotor rotates with a rotation speed of 1/m-times for the rotation speed of the measuring-object rotor, and

the speed reduction side rotation detecting section outputs a cycle angle which makes one cycle when the speed reduction side detecting rotor rotates 180° (360 x m x (1/2) in the angle of the measuring-object rotor, further comprising:

an i-value computing section which counts a rotation variation amount at the time when the speed reduction side rotor is rotated from a first predetermined position to a second predetermined position in a unit of (360/n) x (1/2) x (1/m) ((360/m) x (1/2) in the angle of the measuring-object rotor) from a cycle angle outputted from the speed reduction side rotation detecting section, and sets the counted result as the i-value, wherein the absolute rotational angle detecting section computes an absolute rotational angle of the measuring-object rotor by computation of the following expression:

$$\text{Absolute Rotational Angle} = (360/n) \times (1/2) \times i + \beta \times (1/n).$$

4. The rotational angle detector as claimed in any one of Claims 1 to 3, further comprising:

an approximate absolute angle calculating section for computing the absolute rotational angle of the measuring-object rotor as an approximate absolute angle from the cycle angle outputted from the speed reduction side rotation detecting section, and

a failure diagnosis section for comparing the approximate absolute angle computed by the approximate absolute value computing section with the absolute rotational angle detected by the absolute rotational angle detecting section to determine that abnormality is generated in the speed reduction side rotation detecting section or speed increase side rotation detecting section when a difference between the both angles is more than a predetermined value.

# Fig.1

# Fig.2

(a)

(b)

EP 1 892 498 A1

# Fig.3

# Fig.4

EP 1 892 498 A1

**Fig.5**

# Fig.6

# Fig.7

# Fig.8

# Fig.9

Vehicle going-straight position

Speed reduction gear side

−720°   0   720°

Output waveform in first detection section

Output waveform in second detection section

Cycle angle of speed reduction-side detection gear

Cycle angle of offset correction

7  6  5  4  3  2  1  0  −1  −2  −3  −4  −5  −6  −7  −8   i value

Speed increasing gear side

Output waveform in first detection section

Output waveform in second detection section

Cycle angle of speed increasing-side detection gear

Cycle angle of offset correction

# Fig.10

# Fig.11

(a)

101
100
110
111
X

(b)

101
111
100
110
Y

**EP 1 892 498 A1**

European Patent Office

**EUROPEAN SEARCH REPORT**

Application Number

EP 07 01 6407

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 353 840 A (PWB RUHLATEC IND PROD GMBH [DE]) 7 March 2001 (2001-03-07) * abstract; figures 1,2 * * page 2, lines 3-7 * * page 3, lines 3-8 * * page 4, lines 1-13 * ----- | 1-4 | INV. G01B5/24 G01B7/30 G01B21/22 G01D5/04 G01D5/12 |
| X | EP 1 018 466 A (ALPS ELECTRIC CO LTD [JP]) 12 July 2000 (2000-07-12) * abstract; figures 42-46 * * paragraphs [0008] - [0022] * ----- | 1-4 | |
| X | DE 90 13 001 U1 (WILHELM RUF KG, 8000 MUENCHEN, DE) 15 November 1990 (1990-11-15) * page 3, lines 33-35 * * page 6, lines 13-20; figures 1,2 * ----- | 1-4 | |

TECHNICAL FIELDS SEARCHED (IPC)

G01D
G01B

The present search report has been drawn up for all claims

| Place of search | Date of completion of the search | Examiner |
|---|---|---|
| Berlin | 21 November 2007 | Popovici, Mihai |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.....................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 07 01 6407

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2007

| Patent document cited in search report | | Publication date | Patent family member(s) | | Publication date |
|---|---|---|---|---|---|
| GB 2353840 | A | 07-03-2001 | DE | 19942322 A1 | 08-03-2001 |
| | | | FR | 2798192 A1 | 09-03-2001 |
| | | | IT | T020000839 A1 | 05-03-2002 |
| | | | JP | 3527468 B2 | 17-05-2004 |
| | | | JP | 2001132802 A | 18-05-2001 |
| | | | US | 6481272 B1 | 19-11-2002 |
| EP 1018466 | A | 12-07-2000 | DE | 69927346 T2 | 13-07-2006 |
| | | | JP | 2000205811 A | 28-07-2000 |
| | | | US | 6246232 B1 | 12-06-2001 |
| DE 9013001 | U1 | 15-11-1990 | EP | 0477653 A2 | 01-04-1992 |

EPO FORM P0459

For more details about this annex : see Official Journal of the European Patent Office, No. 12/82

**EP 1 892 498 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006228581 A

- JP 2003042752 A